# EUROPÄISCHE PATENTSCHRIFT

(11) **EP 3 080 519 B1**
(45) Veröffentlichungstag und Bekanntmachung des Hinweises auf die Patenterteilung: **27.11.2019**
(21) Anmeldenummer: 14808576.4
(22) Anmeldetag: 02.12.2014
(51) Int. Cl.: F24F 3/16, F24F 13/24, B60H 1/00, B60H 1/34, G10K 11/168

(54) **SCHALLABSORBIERENDES ELEMENT FÜR EINEN LUFTAUSSTRÖMER**
SOUND-ABSORBENT ELEMENT FOR AN AIR OUTLET
ÉLÉMENT D'ABSORPTION ACOUSTIQUE POUR ÉVENT D'AIR

(30) Priorität: 11.12.2013 DE 202013105639 U
(43) Veröffentlichungstag der Anmeldung: 19.10.2016
(73) Patentinhaber: Dr. Schneider Kunststoffwerke GmbH, 96317 Kronach (DE)
(72) Erfinder: UHLENBUSCH, Olaf, 96275 Marktzeuln (DE)
(86) Internationale Anmeldenummer: PCT/EP2014/076159
(87) Internationale Veröffentlichungsnummer: WO 2015/086366

(56) Entgegenhaltungen:
- DE-A1- 10 047 068
- DE-A1-102005 026 556
- DE-C2- 4 244 906
- DE-U1- 20 016 255

## Beschreibung

Die vorliegende Erfindung betrifft ein schallabsorbierendes Element für einen Luftausströmer, wobei der Luftausströmer ein Gehäuse mit einer Luftaustrittsöffnung und einen Anschluss an einen Luftzuführschacht aufweist, wobei mindestens ein schallabsorbierendes Element in dem Gehäuse und/oder einem Gehäuse des Luftzuführschachts gelagert ist und wobei das schallabsorbierende Element einen Träger aufweist, der mit mindestens einer Schicht aus schallabsorbierendem Material verbunden ist.

Aus dem Stand der Technik ist eine Vielzahl von Maßnahmen und Einrichtungen zur Reduzierung von Geräuschen bei Luftausströmern bekannt. In solchen Luftausströmern sind oftmals dünne und leicht bewegliche Teile gelagert, die durch den austretenden Luftstrom in Schwingung versetzt werden und daher störende Geräusche verursachen. Insbesondere bei einem Kraftfahrzeug ergeben sich solche störenden Geräusche auch durch das Vibrieren von Teilen des Fahrzeugs oder beim Fahren auf einem beispielsweise unebenem Untergrund, was ebenso zu einem ungewollten Vibrieren oder Bewegen der dünnen Bauteile eines Luftausströmers führt. Andererseits entstehen Strömungsgeräusche auch dadurch, dass Luftleitelemente einen Widerstand für die Luftströmung darstellen, insbesondere, wenn sie sich in Extremstellungen befinden (z. B. vertikale Lamellen, die 45° zur Strömungsrichtung stehen, um ausströmende Luft abzulenken).

So sind beispielsweise aus EP 1 826 043 B1 Horizontallamellen, Vertikallamellen oder Schließklappen bekannt, die eine gerade stirnseitige oder rückseitige Kante aufweisen, welche in einen dreidimensional wellenförmig gekrümmten Flächenabschnitt übergeht.

Darüber hinaus ist aus DE 20 2006 006 409 U1 eine Luftdüse zur Führung eines Luftstroms aus einem Luftzuführschacht bekannt, wobei in dem Gehäuse des Luftzuführschachts eine Schließklappe, Lamellen oder Einsätze zum Ableiten des austretenden Luftstroms angeordnet sind und wobei mindestens partiell die Flächen der Schließklappe und/oder die Flächen der Lamellen oder Einsätze und/oder die Gehäuseinnenflächen mit einer Schicht aus weichem, schallabsorbierendem Material belegt sind. Die schallabsorbierenden Materialien können Schaumstoffe oder textile Materialien sein.

Durch die in DE 20 2006 006 409 U1 angegebenen Ausführungen ist es möglich, störende Geräusche zu reduzieren.

Jedoch bewirkt die Schicht aus DE 20 2006 006 409 U1 keine Verbesserung der Luftqualität. Um beispielsweise die Luftqualität der aus einer Klimaanlage eines Kraftfahrzeugs ausgegebenen Luft zu verbessern, sind komplexe Filtereinrichtungen hierfür bekannt. Bei diesen Filtereinrichtungen wird die in den Fahrgastraum geleitete Luft vor dem Ausgeben gereinigt. Diese Filtereinrichtungen sind dazu beispielsweise im Bereich eines Handschuhfachs (DE 694 00 122 T2) oder weiter entfernt von einem Armaturenbrett, welches Luftausströmer aufweist, angeordnet. Diese Anordnungen erlauben den einfachen Zugang zu diesen Filtereinrichtungen. Jedoch legt die Luft von diesen Filtereinrichtungen bis zu der Luftaustrittsöffnung eines Luftausströmers einen langen Weg zurück. Ferner benötigen diese Filtereinrichtungen einen nicht unerheblichen Bauraum.

DE 102 61 081 B3 offenbart ein Luftführungselement, insbesondere einen Luftführungskanal für ein Kraftfahrzeug, mit einem aus Kunststoff hergestellten schallharten Kanalkörper, der mindestens einen durch ein schallabsorbierendes Bauteil ersetzten Wandbereich aufweist, wobei das schallabsorbierende Bauteil eine zumindest teilweise freiliegende Außenseite aufweist. Ein Randbereich des schallabsorbierenden Bauteils wird mit dem Kunststoff des Kanalkörpers derart umspritzt, dass das schallabsorbierende Bauteil zumindest abschnittsweise entlang seines Umfangs formschlüssig mit dem Kanalkörper verbunden ist.

DE 103 43 696 A1 offenbart eine Klappe, insbesondere für einen Luftkanal eines Kraftfahrzeug-Belüftungssystems, durch die der Luftstrom im Luftkanal geregelt wird, wofür die Klappe verschiedene Stellungen im Luftkanal einnehmen kann, wobei die Klappe einen luftdurchlässigen Bereich und einen luftundurchlässigen Bereich aufweist.

DE 197 05 629 A1 offenbart eine Einrichtung zur Minderung der von Komponenten einer Heiz- oder Klimaanlage für Kraftfahrzeuge ausgehenden und in den Fahrgastraum gelangenden Geräusche mit einer mit schalldämpfendem Material ausgestatteten Luftklappe, wobei die Luftklappe eine innerhalb des Umluftkanals angeordnete Zusatzklappe ist und die Zusatzklappe im Wesentlichen aus luftdurchlässigem Material besteht.

DE 91 00 514 U1 offenbart ein Luftführungselement, insbesondere Lüftungsdüse für ein Kraftfahrzeug, mit einem formstabilen, schallharten Kunststoff-Kanalkörper, vorzugsweise aus Polypropylen, wobei ein Wandbereich des Kanalkörpers teilweise durch ein schallweiches Dämmteil ersetzt ist und das schallweiche Dämmteil aus Melaminharzschaumstoff besteht.

DE 42 44 906 C2 offenbart ein Gebläse für eine Kraftfahrzeugklimaanlage. Das Gebläse weist ein Gebläseradgehäuse und ein schallabsorbierendes Element auf. Das schallabsorbierende Element ist in dem Gebläseradgehäuse angeordnet, um dessen Inneres in einen ersten und einen zweiten Raum zu unterteilen. Der erste Raum besitzt einen Lufteinlass und einen Luftauslass und nimmt ein Gebläserad auf. Der zweite Raum nimmt einen Motor auf, der mit dem Gebläserad derart verbunden ist, dass das Gebläserad durch den Motor angetrieben wird, um Luft durch den ersten Raum strömen zu lassen. Das Gebläseradgehäuse ist mit einem Motorkühlluftkanal versehen, welcher integral mit dem Gebläseradgehäuse ausgebildet ist. Außerdem erstreckt sich der Motorkühlluftkanal zwischen dem ersten und dem zweiten Raum über das schallabsorbierende Element, um Motorkühlluft aus dem ersten Raum zu dem Motor in den zweiten Raum einzuleiten.

DE 100 47 068 A1 offenbart ein Filter zur Entfernung von Inhaltsstoffen aus einem in einem Kanal geführten Luftstrom einer Heizungs- oder Klimaanlage eines Kraftfahrzeuges. Das Filter besteht aus wenigstens zwei Filterlagen, die in Strömungsrichtung einen Abstand zueinander aufweisen, so dass zwischen den Filterlagen ein Zwischenraum gebildet ist. Der Abstand zwischen den Filterlagenentspricht in etwa dem Viertel einer vorbestimmten Schallwellenlänge. Dadurch ist der Filter auch akustisch aktiv und trägt zur Geräuschdämmung bei.

Aus DE 200 16 255 U1 ist eine Einrichtung zum Schalldämmen bekannt. Die Einrichtung weist ein Gehäuse auf, in dem Dämmmaterial angeordnet ist. Das Gehäuse seinerseits ist mit Luftdurchtrittsöffnungen versehen und das in dem Gehäuse angeordnete Dämmmaterial besteht wenigstens zu 50% aus Schafschurwolle.

Aus DE 10 2005 026 556 A1 ist ein Luftführungskanal zum Belüften, Heizen und/oder Klimatisieren eines Fahrzeuginnenraums bekannt. Der Luftführungskanal besitzt eine Kanalwandung, welche zumindest teilweise aus einem flexiblen Material gefertigt ist. Das flexible Material umfasst einen Vliesstoff und in der Kanalwandung sind Bereiche ausgebildet, die einen definierten Luftaustritt ermöglichen.

Aufgabe der vorliegenden Erfindung ist es daher, Geräusche aus einem Luftausströmer zu reduzieren oder zu unterdrücken und zugleich die Qualität der ausgegebenen Luft zu verbessern.

Die Aufgabe wird durch ein schallabsorbierendes Element mit den in Anspruch 1 angegebenen technischen Merkmalen gelöst.

Vorteilhafte Weiterbildungen der Erfindung sind in den Unteransprüchen im Detail angegeben.

Bei einem schallabsorbierenden Element für einen Luftausströmer, wobei der Luftausströmer ein Gehäuse mit einer Luftaustrittsöffnung und einen Anschluss an einen Luftzuführschacht aufweist, wobei mindestens ein schallabsorbierendes Element in dem Gehäuse und/oder einem Gehäuse des Luftzuführschachts gelagert ist und wobei das schallabsorbierende Element einen Träger aufweist, der mit mindestens einer Schicht aus schallabsorbierendem Material verbunden ist, weist die mindestens eine Schicht aus schallabsorbierendem Material Aktivkohle auf oder es ist mindestens eine weitere Schicht aus Aktivkohle auf die Schicht aus schallabsorbierendem Material aufgebracht.

Das zusätzliche Einbringen von Aktivkohle in die mindestens eine Schicht oder das Aufbringen mindestens einer weiteren Schicht aus Aktivkohle bewirkt einerseits die Reduzierung oder Unterdrückung von Geräuschen, die durch Komponenten eines Luftausströmers (Lamellen, Schließklappe, Luftleitelemente) hervorgerufen werden, und andererseits eine Reinigung der ausströmenden Luft aus dem Luftausströmer. Insbesondere wird hierzu kein zusätzlicher Bauraum für Filtereinrichtungen benötigt und die Luft in dem Bereich gereinigt, welcher sich unmittelbar vor dem Fahrgastraum befindet.

Zusätzlich ist die erfindungsgemäße Ausgestaltung im Hinblick auf eine Gewichtsreduzierung vorteilhaft, da sowohl das schallabsorbierende Material (beispielsweise Schaumstoff) ein geringeres Gewicht aufweist als beispielsweise aus dem Stand der Technik bekannte Gummilippen, welche an Lamellen zum Vermeiden von Störgeräuschen durch Anschlagen an andere Teile angebracht sind, als auch Aktivkohle eine geringere Dichte als herkömmliche Kunststoffe für Lamellen aufweist.

Die mindestens eine Schicht kann hierbei flächig auf mindestens einer Seite des Trägers aufgebracht sein. Flächig bedeutet in diesem Zusammenhang, dass die mindestens eine Schicht die Seite des Trägers im Wesentlichen vollständig bedeckt oder nur einen bestimmten Bereich (beispielsweise einen umlaufenden Rand) frei lässt.

Ferner kann auf beiden Seiten des Trägers eine Schicht aufgebracht sein.

Ferner kann der Träger mindestens eine Aufnahme aufweisen, in welcher die Schicht so aufgenommen ist, dass die Schicht mit dem die Aufnahme umgebenden Bereich des Trägers fluchtet. Diese Ausführung eignet sich insbesondere bei einer Ausführung, in welcher der Träger flächig ausgebildet ist.

Die mindestens eine Schicht kann aus Schaumstoff bestehen, wobei in den Schaumstoff Aktivkohle eingebracht oder der Schaumstoff mit Aktivkohle beschichtet ist. Die Aktivkohle kann mit unterschiedlichen Volumen- oder Gewichtsanteilen in dem Schaumstoff aufgenommen und in verschiedenen Formen in dem Schaumstoff vorhanden sein. Alternativ kann der Schaumstoff vollflächig mit der Aktivkohle beschichtet sein. Die Beschichtung mit Aktivkohle kann verschiedenartig erfolgen (beispielsweise Kleben oder Anbringung auf die Schaumstoffschicht mittels eines Netzes oder Gitters, das mit dem Träger verbunden ist).

Der Schaumstoff kann in weiteren Ausführungen offenporig ausgebildet sein. Offenporige Schaumstoffe bewirken eine verbesserte Geräuschabsorbierung und bieten eine größere Oberfläche. Eine größere Oberfläche kann die Reinigung der Luft insbesondere durch die entweder in dem Schaumstoff aufgenommenen Aktivkohlepartikel oder eine Beschichtung mit Aktivkohle deutlich verbessern.

In weiteren Ausführungsformen kann die mindestens eine Schicht auch vollständig aus Aktivkohle bestehen. Die Aktivkohle kann hierbei ebenfalls über ein Netz oder Gitter an dem Träger befestigt oder vollflächig auf einem flächigen Träger anderweitig aufgebracht sein.

Der Träger kann im Bereich der Schichten Durchbrüche, Öffnungen oder eine Tragstruktur aufweisen. Hierbei wird das Gewicht des schallabsorbierenden Elementes reduziert. Vorteilhafterweise strömt die ausströmende Luft nicht nur an der Schicht (z. B. Vlies) aus schallabsorbierenden Material mit Aktivkohle vorbei, sondern durchströmt diese zusätzlich, wodurch die Reinigungswirkung weiter verbessert wird.

Das schallabsorbierende Element kann eine Lamelle eines Luftausströmers, eine Schließklappe eines Luftausströmers, ein Luftleitelement eines Luftzuführschachts und/oder mindestens ein Teil des Gehäuses des Luftausströmers und/oder des Luftzuführschachts sein.

Die mindestens eine Schicht kann eine offenporige Oberfläche aufweisen. In dieser Ausführung kann nicht nur der Schaumstoff offenporig ausgebildet sein, sondern auch die mindestens eine Schicht, welche aus Aktivkohle allein oder aus in/an dem schallabsorbierenden Material vorhandene Aktivkohle bestehen kann.

Die Oberfläche der mindestens einen Schicht kann darüber hinaus eine regelmäßige oder unregelmäßige Oberflächenstruktur aufweisen. Oberflächenstrukturen vergrößern zusätzlich die Oberfläche, was sich insbesondere auf die Geräuschreduzierung/-absorption und die Luftreinigung positiv auswirkt. Dazu kann durch bestimmte Oberflächenstrukturen die Ausdehnung von Schallwellen gezielt behindert werden. Regelmäßige und unregelmäßige Strukturen umfassen unter anderem Waben, Rillen, Öffnungen und Erhebungen sowie weitere, die Oberfläche vergrößernde Maßnahmen.

Die mindestens eine Schicht kann thermisch verformt sein. Insbesondere beim Anbringen an einen rahmenförmigen Träger ergeben sich im Hinblick auf das Einsatzgebiet und den Einsatzzweck (beispielsweise Lamelle) entsprechende Oberflächenverläufe. Hierdurch lassen sich durch die Schichten aerodynamische stromlinienförmige Oberflächen auf einfache Art und Weise erzeugen.

Die mindestens eine Schicht kann derart ausgebildet sein, dass sie in Luftströmungsrichtung der Luftaustrittsöffnung zugewandt eine größere Dicke aufweist als in dem Abschnitt, der dem Luftzuführschacht zugewandt ist. Eine derartige unterschiedliche Dickenverteilung bewirkt eine verbesserte Geräuschreduzierung oder Unterdrückung und eine definierte Luftleitung.

Weiterhin kann die weitere Schicht in einem Tragrahmen aufgenommen und der Tragrahmen mit dem Träger verbunden sein. Ein Tragrahmen kann beispielsweise ein netzartiges Mittel oder ein Gitter oder ein so genannter Käfig sein. Die mindestens eine Schicht kann mit dem Träger und/oder einer zweiten Schicht verklebt oder verschweißt sein.

Insbesondere sind als schallabsorbierende Materialien auch Beflockungen und textile Materialien für das schallabsorbierende Element verwendbar.

Weitere Vorteile, Merkmale sowie Ausgestaltungsmöglichkeiten ergeben sich aus der nachfolgenden Figurenbeschreibung mit Bezug auf die zugehörigen Zeichnungen.

Die in den Figuren dargestellten Ausführungsbeispiele sind nicht maßstäblich und können bei zu implementierenden Ausführungsformen vom Veranschaulichten abweichen.

In den Zeichnungen zeigen:
- Fig. 1: eine schematische Ansicht eines Trägers für ein schallabsorbierendes Element in einer ersten Ausführungsform;
- Fig. 2: eine schematische Ansicht eines Trägers für ein schallabsorbierendes Element in einer zweiten Ausführungsform;
- Fig. 3: eine schematische Ansicht eines Trägers für ein schallabsorbierendes Element in einer dritten Ausführungsform;
- Fig. 4: eine schematische Ansicht eines schallabsorbierenden Elementes der ersten Ausführungsform;
- Fig. 5: eine Explosionszeichnung eines schallabsorbierenden Elementes der ersten Ausführungsform in schematischer Ansicht;
- Fig. 6: eine schematische Ansicht eines schallabsorbierenden Elementes der zweiten Ausführungsform;
- Fig. 7: eine Explosionszeichnung eines schallabsorbierenden Elementes der zweiten Ausführungsform in schematischer Ansicht; und
- Fig. 8: eine schematische Ansicht eines Luftausströmers und eines Luftzuführschachtes mit verschiedenen schallabsorbierenden Elementen.

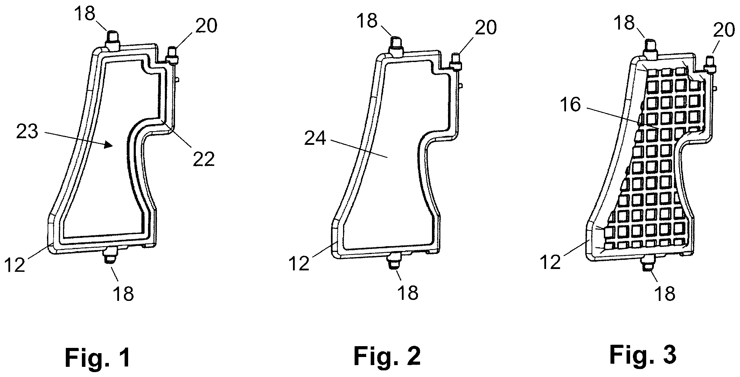

Gleiche Teile sind in der Figurenbeschreibung der Figuren 1 bis 8 mit den gleichen Bezugszeichen versehen, sofern sie in ihrer Funktion und Ausgestaltung im Wesentlichen einander entsprechenden.

Fig. 1 zeigt eine schematische Ansicht eines Trägers 12 für ein schallabsorbierendes Element 10 in einer ersten nicht beanspruchten Ausführungsform. Der Träger 12 ist als Bestandteil einer Vertikallamelle eines Luftausströmers 30 (in Fig. 1 nicht dargestellt) ausgebildet. Der Träger 12 weist zwei Lagerzapfen 18 auf, über die die Vertikallamelle bzw. der Träger 12 drehbar in einem Gehäuse 31 des Luftausströmers 30 gelagert ist. Ferner weist der Träger 12 einen Zapfen 20 auf, wobei eine Vielzahl von Vertikallamellen bzw. Trägern 12 über ihre Zapfen 20 und über eine, die Zapfen 20 miteinander verbindende Koppelstange verschwenkt werden. Der als Rahmen ausgebildete Träger 12 weist innenliegend eine Stufe 22 auf, auf welcher eine Schicht 14 mit schallabsorbierendem Material aufgebracht wird. Vorzugsweise weist der Rahmen 12 auf beiden Seiten eine derartige Stufe 22 auf, so dass an dem Träger 12 auf beiden Seiten eine Schicht aus schallabsorbierendem Material aufgebracht und mit dem Träger 12 verbunden werden kann. Der von der Stufe 22 und dem als Rahmen ausgebildeten Träger 12 umgebende Bereich 23 bleibt frei, so dass in Abhängigkeit der Dicke der Stufe 22 die auf beiden Seiten des Trägers 12 aufgebrachten Schichten 14 direkt aneinander liegen oder beabstandet zueinander angeordnet sind.

Fig. 2 zeigt eine schematische Ansicht eines Trägers 12 für ein schallabsorbierendes Element 10 einer zweiten Ausführungsform. Der in Fig. 2 dargestellte Träger 12 ist im Wesentlichen als Bestandteil einer Vertikallamelle für einen Luftausströmer 30 (in Fig. 2 nicht dargestellt) ausgebildet. Der Träger 12 weist zwei Lagerzapfen 18 auf, über die der Träger 12 bzw. die Vertikallamelle in einem Gehäuse 31 eines Luftausströmers 30 drehbar gelagert ist. Ferner weist der Träger 12 bzw. die Vertikallamelle einen Zapfen 20 auf, wobei eine Vielzahl von Vertikallamellen bzw. Trägern 12 über eine die Zapfen 20 der Vertikallamellen verbindende Koppelstange gemeinsam verschwenkbar ist. Im Gegensatz zu dem in Fig. 1 gezeigten Ausführungs beispiel weist der Träger 12 aus Fig. 2 keinen freien Bereich 23 auf, sondern besitzt eine flächige Aufnahme 24.

Auf die flächige Aufnahme 24 wird eine Schicht 14 aus schallabsorbierendem Material aufgebracht. Vorzugsweise wird eine Schicht 14 sowohl auf der vorderen, in Fig. 2 dargestellten, Seite der Aufnahme 24 als auch auf der Rückseite der Aufnahme 24 aufgebracht. Der umlaufende Teil des Trägers 12, welcher die Aufnahme 24 umgibt, übersteht die Aufnahme 24 um ein bestimmtes Maß, welches insbesondere so groß gewählt ist, dass eine aufgesetzte Schicht 14 mit dem umlaufenden Teil des Trägers 12 fluchtet.

Fig. 3 zeigt eine schematische Ansicht eines Trägers 12 für ein schallabsorbierendes Element 10 einer dritten Ausführungsform. Auch der in Fig. 3 dargestellte Träger 12 ist als Vertikallamelle eines Luftausströmers 30 ausgebildet. Der Träger 12 weist Lagerzapfen 18 auf, über die der Träger 12 bzw. die Vertikallamelle in einem Gehäuse 31 des Luftausströmers 30 drehbar gelagert ist. Ferner weist der Träger 12 bzw. die Vertikallamelle einen Zapfen 20 auf, wobei eine Vielzahl von Trägern 12 bzw. Vertikallamellen über eine, die Zapfen 20 der Vertikallamellen miteinander verbindende Koppelstange gemeinsam verschwenkbar sind. Im Gegensatz zu den in Fig. 1 und 2 gezeigten Trägern 12 ist der Träger 12 aus Fig. 3 so ausgebildet, dass er in dem Bereich, in welchem die Schicht 14 aus schallabsorbierendem Material aufgebracht wird, eine Struktur 16 aufweist. Die Struktur 16 kann, wie in Fig. 3 dargestellt, gitterförmig ausgebildet sein. Eine solche Struktur weist eine Vielzahl von Horizontal- und Vertikal- bzw. rechtwinklig zueinander verlaufenden Leisten auf, wobei zwischen den Leisten Durchbrüche vorhanden sind. Die Struktur 16 dient unter anderem zur Gewichtsreduzierung für den Träger 12. Auf die Struktur 16 kann insbesondere auf beiden Seiten des Trägers 12 eine Schicht 14 aus schallabsorbierendem Material aufgebracht werden.

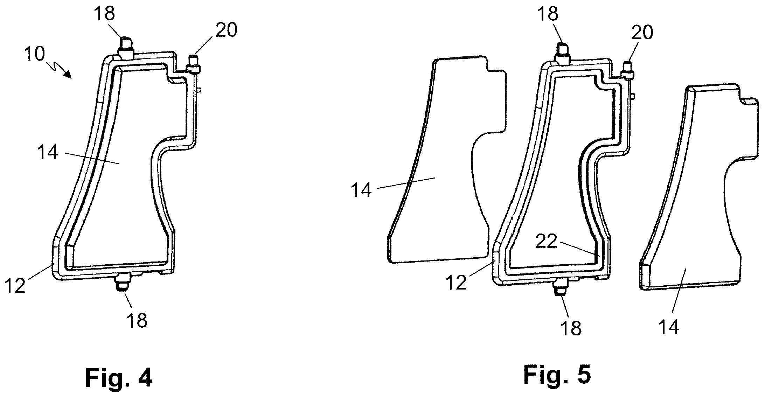

Fig. 4 zeigt eine schematische Ansicht eines schallabsorbierenden Elementes 10 der ersten Ausführungsform. Im Gegensatz zu dem in Fig. 1 dargestellten Träger 12 ist zusätzlich eine Schicht 14 dargestellt, welche auf der Stufe 22 aufgebracht ist. Die Schicht 14 ist an ihren Randbereichen auf der Stufe 22 aufgeklebt, wobei auch eine andere Verbindung möglich ist. Insbesondere ist auf beiden Seiten des Trägers 12 eine Schicht 14 aus schallabsorbierendem Material auf der Stufe 22 bzw. der gegenüberliegenden Stufe (in Fig. 4 nicht dargestellt) aufgebracht.

Fig. 5 zeigt eine Explosionszeichnung eines schallabsorbierenden Elementes der ersten Ausführungsform in schematischer Ansicht. Die Schichten 14 weisen eine bestimmte Dicke auf, wobei in der ersten Ausführungsform die Schichten 14 im mit dem als Rahmen ausgebildeten Träger 12 verbundenen Zustand den Träger 12 um ein bestimmtes Maß überstehen. Die Schichten 14 bestehen aus einem schallabsorbierenden Material. Insbesondere ist das schallabsorbierende Material der Schichten 14 ein Schaumstoff, in welchem Aktivkohlepartikel eingebracht oder auf dem Schaumstoff aufgebracht sind. Der Schaumstoff kann auch vollständig mit Aktivkohle beschichtet sein, so dass die nach außen ragende Oberfläche der Schicht 14 bzw. der Schichten 14 mit Aktivkohle bedeckt ist. Darüber hinaus kann, anders als in den Fig. 4 und 5 dargestellt, die Dicke der Schichten 14 variieren. So können die Schichten 14 in Luftströmungsrichtung einer Luftaustrittsöffnung des Luftausströmers 30 zugewandt eine größere Dicke aufweisen als in dem Abschnitt, der einem Luftzuführschacht 32 (in den Fig. 4 und 5 nicht dargestellt) zugewandt ist. Vorteilhaft ist es insbesondere, wenn die Oberfläche der Schichten 14 offenporig aufgestaltet ist. Bei den in den Figuren dargestellten Ausführungen weisen die Schichten 14 jeweils eine glatte Oberfläche auf. Dies ist jedoch nur der schematischen Darstellung geschuldet, wobei keine Beschränkung auf die dargestellten Ausführungen vorliegt.

Eine offenporige Oberfläche kann durch regelmäßige oder unregelmäßige Strukturen gebildet werden. Ferner können Muster, wie beispielsweise Waben oder Wechsel von Vertiefungen und Erhebungen vorgesehen sein. Darüber hinaus können in weiteren Ausführungsformen die Schichten 14 so ausgebildet sein, dass der Schaumstoff derart offenporig ausgebildet ist, dass durch das Material der Schichten 14 ein Luftstrom möglich ist.

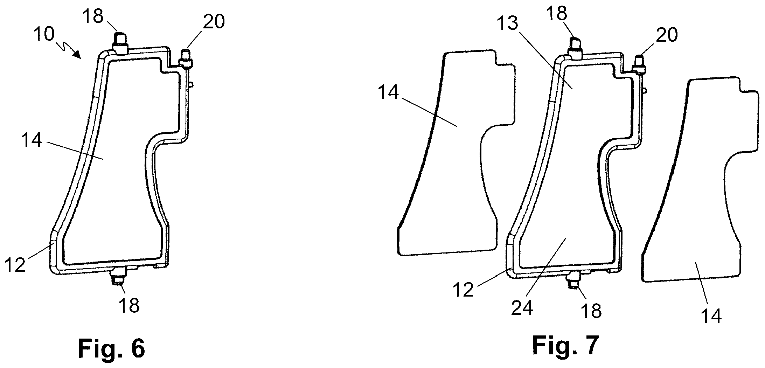

Fig. 6 zeigt eine schematische Ansicht eines schallabsorbierenden Elementes 10 der zweiten Ausführungsform. Bei dem in den Fig. 6 und 7 dargestellten schallabsorbierendem Element 10 der zweiten Ausführungsform (Fig. 2) ist jeweils eine dünne Schicht 14 auf beiden Seiten 13 des Trägers 12 auf die Aufnahme 24 aufgeklebt. Die Höhe, um welche der umlaufende Teil des Trägers 12 die Aufnahme 24 übersteht, ist so groß gewählt, dass im verbundenen Zustand mit den Schichten 14 aus schallabsorbierendem Material die Oberfläche der Schichten 14 mit dem umlaufenden Bereich des Träger 12 fluchtet. Wie bereits für die Fig. 4 und 5 angegeben, kann die Schicht 14 aus einem Schaumstoff bestehen und weist zudem Aktivkohle auf. Die Aktivkohle kann vollständig auf der Schicht 14 aufgebracht oder als Bestandteil in der Schicht 14 vorhanden sein. Darüber hinaus kann die Schicht 14 auch vollständig aus Aktivkohle gebildet sein. Beispielsweise werden Aktivkohlepartikel vollflächig auf die Aufnahme 24 aufgeklebt. Dadurch werden eine Geräuschreduzierung oder -eliminierung und eine Luftreinigung durch die Aktivkohle bewirkt.

Fig. 7 zeigt eine Explosionszeichnung eines schallabsorbierenden Elementes 10 der zweiten Ausführungsform in schematischer Ansicht.

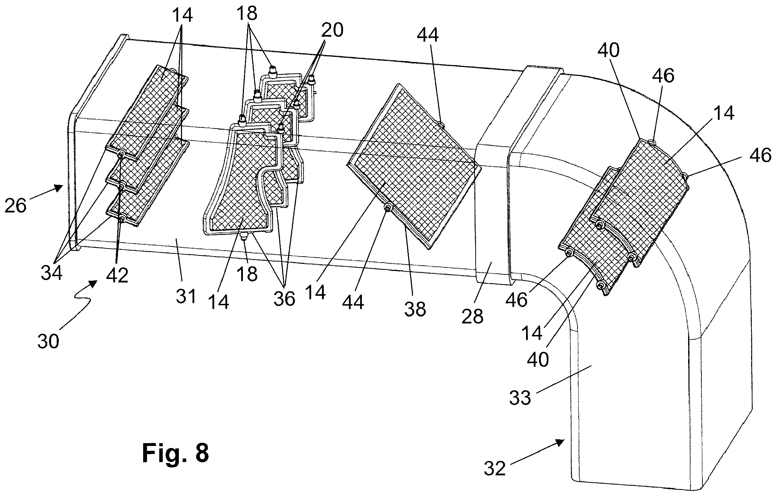

Fig. 8 zeigt eine schematische Ansicht eines Luftausströmers 30 und eines Luftzuführschachtes 32 mit verschiedenen schallabsorbierenden Elementen. Der Luftausströmer 30 weist ein Gehäuse 31 auf. Das Gehäuse 31 aus Fig. 8 weist einen im Wesentlichen rechteckigen Querschnitt auf und besitzt eine Luftaustrittsöffnung 26. Die aus der Luftaustrittsöffnung 26 ausströmende Luft wird über den Luftzuführschacht 32, welcher ebenso ein Gehäuse 33 aufweist und über den Anschluss 28 des Luftausströmers 30 mit diesem verbunden ist, zugeführt. Die durch den Luftzuführschacht 32 zugeführte Luft wird über Luftleitelemente 40 umgelenkt und strömt auch entlang der Oberfläche des Luftzuführkanals 32, wobei der Luftzuführkanal 32 durch seine Krümmung ebenso eine Umlenkung bewirkt. Eine Schließklappe 38 dient dazu, den Querschnitt des Luftausströmers 30 vollständig zu versperren, wobei in Abhängigkeit der Stellung der Schließklappe 38 die Menge an ausströmender Luft sowie das Ausströmen von Luft eingestellt wird. Vertikal verlaufende Lamellen 36 dienen zum Ablenken der Luft um die Schwenkachsen der Lamellen 36, die durch die Lagerzapfen 18 der Lamellen 36 verlaufen. Horizontal verlaufende Lamellen 34 dienen zum Ablenken der Luft senkrecht zu den vertikal verlaufenden Lamellen 36. Die horizontal verlaufenden Lamellen 34 weisen Lagerzapfen 42 auf, über welche die Lamellen 34 verschwenkbar im Gehäuse 31 des Luftausströmers 30 gelagert sind. Die Lamellen 34 können über Koppelelemente verbunden sein, so dass beim Verschwenken einer Lamelle 34 die anderen Lamellen 34 eine entsprechende Bewegung ausführen.

Die Lamellen 36 sind über die Lagerzapfen 18 ebenfalls im Gehäuse 31 des Luftausströmers 30 drehbar gelagert und über eine Koppelstange und den Zapfen 20 miteinander gemeinsam verschwenkbar. Die Schließklappe 38 ist über die Lagerzapfen 44 verschwenkbar im Gehäuse 31 des Luftausströmers 30 gelagert und kann über eine Einrichtung (in Fig. 8 nicht dargestellt) verschwenkt werden.

Die Luftleitelemente 40 sind über Lagerzapfen 46 im Gehäuse 33 des Luftzuführschachtes 32 gelagert. Im Gegensatz zu den anderen Mitteln (Lamellen 34, Lamellen 36 und Schließklappe 38) können die Luftleitelemente 40 nicht verschwenkt werden.

Bei dem in Fig. 8 dargestellten Beispiel weisen die Lamellen 34, die Lamellen 36, die Schließklappe 38 und die Luftleitelemente 40 jeweils Schichten 14 aus schallabsorbierendem Material auf. Die Schichten 14 sind hierbei auf beiden Seiten der Lamellen 34, der Lamellen 36, der Schließlappe 38 und der Luftleitelemente 40 aufgebracht. Die hier gezeigte Ausführung ist nur beispielhaft. So können die Schichten 14 auch nur auf einer Gruppe von Lamellen 34 oder 36 bzw. der Schließklappe 38 oder den Luftleitelementen 40 oder auf mehreren der vorstehend aufgezählten Komponenten, aber nicht allen diesen Komponenten, aufgebracht sein.

Es ist darüber hinaus möglich, mindestens eine Wand des Gehäuses 31 des Luftausströmers 30 oder des Gehäuses 33 des Luftzuführschachtes 32 mit einer Schicht 14 aus schallabsorbierendem Material zu beschichten. Die Schichten 14 aus schallabsorbierendem Material weisen Aktivkohle auf oder sind vollständig mit Aktivkohle beschichtet oder bestehen aus Aktivkohle, so dass einerseits eine Reduzierung und Eliminierung von störenden Geräuschen und andererseits eine Luftreinigung der ausströmenden Luft erreicht wird.

Ein derartiger Luftausströmer 30 und ein derartiger Luftzuführschacht 32 können beispielsweise in einem Kraftfahrzeug angeordnet sein. Gegenüber bekannten Systemen kann auf Filtereinrichtungen verzichtet werden, die einen großen Bauraum benötigen und eine Reinigung der Luft entfernt zu der Luftaustrittsöffnung 36 bewirken.

### Bezugszeichenliste

- 10: schallabsorbierendes Element
- 12: Träger
- 13: Seite
- 14: Schicht
- 16: Struktur
- 18: Lagerzapfen
- 20: Zapfen
- 22: Stufe
- 23: Bereich
- 24: Aufnahme
- 26: Luftaustrittsöffnung
- 28: Anschluss
- 30: Luftausströmer
- 31: Gehäuse
- 32: Luftzuführschacht
- 33: Gehäuse
- 34: Lamelle
- 36: Lamelle
- 38: Schließklappe
- 40: Luftleitelement
- 42: Lagerzapfen
- 44: Lagerzapfen
- 46: Lagerzapfen

## Patentansprüche

1. Schallabsorbierendes Element (10) für einen Luftausströmer (30), wobei der Luftausströmer (30) ein Gehäuse (31) mit einer Luftaustrittsöffnung (26) und einen Anschluss (28) an einen Luftzuführschacht (32) aufweist, wobei mindestens ein schallabsorbierendes Element (10) in dem Gehäuse (31) und/oder einem Gehäuse (33) des Luftzuführschachts (32) gelagert ist und wobei das schallabsorbierende Element (10) einen Träger (12) aufweist, der mit mindestens einer Schicht (14) aus schallabsorbierendem Material verbunden ist, wobei die mindestens eine Schicht (14) aus schallabsorbierendem Material Aktivkohle aufweist oder dass mindestens eine weitere Schicht aus Aktivkohle auf die Schicht (14) aus schallabsorbierendem Material aufgebracht ist, **dadurch gekennzeichnet, dass** die mindestens eine Schicht (14) flächig auf mindestens einer Seite (13) des Trägers (12) aufgebracht ist, wobei der Träger (12) mindestens eine Aufnahme (24) aufweist, in welcher die Schicht (14) so aufgenommen ist, dass die Schicht (14) mit dem die Aufnahme (24) umgebenen Bereich des Trägers (12) fluchtet, und dass das schallabsorbierende Element (10) eine Lamelle (34; 36) eines Luftausströmers (30), eine Schließklappe (38) eines Luftausströmers (30), ein Luftleitelement (40) eines Luftzuführschachts (32) und/oder mindestens ein Teil des Gehäuses (31; 33) des Luftausströmers (30) und/oder des Luftzuführschachts (32) ist.

2. Schallabsorbierendes Element (10) nach Anspruch 1, wobei auf beiden Seiten des Trägers (12) eine Schicht (14) aufgebracht ist.

3. Schallabsorbierendes Element (10) nach Anspruch 1 oder 2, wobei
- die mindestens eine Schicht (14) aus Schaumstoff besteht, wobei in den Schaumstoff Aktivkohle eingebracht oder der Schaumstoff mit Aktivkohle beschichtet ist und wobei der Schaumstoff offenporig ausgebildet ist oder
- die mindestens eine Schicht (14) vollständig aus Aktivkohle besteht.

4. Schallabsorbierendes Element (10) nach Anspruch 1 oder 2, wobei der Träger (12) im Bereich der Schichten (14) Durchbrüche, Öffnungen oder eine Tragstruktur aufweist.

5. Schallabsorbierendes Element (10) nach einem der Ansprüche 1 bis 4, wobei
- die mindestens eine Schicht (14) eine offenporige Oberfläche aufweist und/oder
- die Oberfläche der mindestens einen Schicht (14) eine regelmäßige oder unregelmäßige Oberflächenstruktur aufweist und/oder
- die mindestens eine Schicht (14) thermisch verformt ist, und/oder
- die mindestens eine Schicht (14) mit dem Träger (12) und/oder einer zweiten Schicht verklebt oder verschweißt ist.

6. Schallabsorbierendes Element (10) nach einem der Ansprüche 1 bis 5, wobei die mindestens eine Schicht (14) derart ausgebildet ist, dass sie in Luftströmungsrichtung der Luftaustrittsöffnung (26) zugewandt eine größere Dicke aufweist als dem Abschnitt, der dem Luftzuführschacht (32) zugewandt ist.

7. Schallabsorbierendes Element (10) nach Anspruch 1, wobei die weitere Schicht in einem Tragrahmen aufgenommen und der Tragrahmen mit dem Träger (12) verbunden ist.

## Claims

1. Sound-absorbing element (10) for an air vent (30), wherein the air vent (30) comprises a housing (31) with an air outlet opening (26) and a connection (28) to an air supply shaft (32), wherein at least one sound-absorbing element (10) is mounted in the housing (31) and/or a housing (33) of the air supply shaft (32) and wherein the sound-absorbing element (10) comprises a support (12) which is connected with at least one layer (14) of sound-absorbing material, wherein the at least one layer (14) of sound-absorbing material comprises activated carbon or at least one further layer of activated carbon is applied to öthe layer (14) of sound-absorbing material, **characterised in that** the at least one layer (14) is applied over an area to at least one side (13) of the support (12), wherein the support (12) has at least one seat (24) in which the layer (14) is so received that the layer (14) is aligned with the region of the support (12) surrounding the seat (24), and that the sound-absorbing element (10) is a slat (34; 36) of an air vent (30), a closure flap (38) of an air vent (30), an air guide element (40) of an air supply shaft (32) and/or at least a part of the housing (31; 33) of the air vent (30) and/or of the air supply shaft (32).

2. Sound-absorbing element (10) according to claim 1, wherein a layer (14) is applied to both sides of the support (12).

3. Sound-absorbing element (10) according to claim 1 or 2, wherein
- the at least one layer (14) consists of foamed material, wherein activated carbon is incorporated in the foamed material or the foamed material is coated with activated carbon and the foamed material is of open-pore construction, or
- the at least one layer (14) consists entirely of activated carbon.

4. Sound-absorbing element (10) according to claim 1 or 2, wherein the support (12) has passages, openings or a support structure in the region of the at least one layer (14).

5. Sound-absorbing element (10) according to any one of claims 1 to 4, wherein
- the at least one layer (14) has an open-pore surface and/or
- the surface of the at least one layer (14) has a regular or irregular surface structure and/or
- the at least one layer (14) is thermally deformed and/or
- the at least one layer (14) is glued or welded to the support (12) and/or to a second layer.

6. Sound-absorbing element (10) according to any one of claims 1 to 5, wherein the at least one layer (14) is so constructed that in air flow direction it has a greater thickness towards the air outlet opening (26) than the section towards the air supply shaft (32).

7. Sound-absorbing element (10) according to claim 1, wherein the further layer is received in a support frame and the support frame is connected with the support (12).

## Revendications

1. Elément d'absorption acoustique (10) pour un diffuseur d'air (30), dans lequel le diffuseur d'air (30) présente un boîtier (31) avec une ouverture de sortie d'air (26) et un raccord (28) à un puits d'amenée d'air (32), dans lequel au moins un élément d'absorption acoustique (10) est monté dans le boîtier (31) et/ou un boîtier (33) du puits d'amenée d'air (32) et dans lequel l'élément d'absorption acoustique (10) présente un support (12), qui est relié à au moins une couche (14) composée d'un matériau d'absorption acoustique, dans lequel l'au moins une couche (14) composée d'un matériau d'absorption acoustique présente du charbon actif ou au moins une autre couche composée de charbon actif est appliquée sur la couche (14) composée d'un matériau d'absorption acoustique, **caractérisé en ce que** l'au moins une couche (14) est appliquée à plat sur au moins un côté (13) du support (12), dans lequel le support (12) présente au moins un logement (24), dans lequel la couche (14) est logée de telle sorte que la couche (14) est en affleurement avec la zone, entourant le logement (24), du support (12), et que l'élément d'absorption acoustique (10) est une lamelle (34 ; 36) d'un diffuseur d'air (30), une trappe de fermeture (38) d'un diffuseur d'air (30), un élément d'acheminement d'air (40) d'un puits d'amenée d'air (32) et/ou au moins une partie du boîtier (31 ; 33) du diffuseur d'air (30) et/ou du puits d'amenée d'air (32).

2. Elément d'absorption acoustique (10) selon la revendication 1, dans lequel une couche (14) est appliquée sur les deux côtés du support (12).

3. Elément d'absorption acoustique (10) selon la revendication 1 ou 2, dans lequel
- l'au moins une couche (14) est constituée de mousse, dans lequel du charbon actif est introduit dans la mousse ou la mousse est revêtue de charbon actif et dans lequel la mousse est réalisée à pores ouverts ou
- l'au moins une couche (14) est constituée en totalité de charbon actif.

4. Elément d'absorption acoustique (10) selon la revendication 1 ou 2, dans lequel le support (12) présente dans la zone des couches (14) des ajours, des ouvertures ou une structure porteuse.

5. Elément d'absorption acoustique (10) selon l'une quelconque des revendications 1 à 4, dans lequel
- l'au moins une couche (14) présente une surface à pores ouverts et/ou
- la surface de l'au moins une couche (14) présente une structure de surface régulière ou irrégulière, et/ou
- l'au moins une couche (14) est déformée thermiquement, et/ou
- l'au moins une couche (14) est collée ou soudée au support (12) et/ou à une deuxième couche.

6. Elément d'absorption acoustique (10) selon l'une quelconque des revendications 1 à 5, dans lequel l'au moins une couche (14) est réalisée de telle manière qu'elle présente dans le sens d'écoulement de l'air, de manière tournée vers l'ouverture de sortie d'air (26), une épaisseur plus importante que la section qui est tournée vers le puits d'amenée d'air (32).

7. Elément d'absorption acoustique (10) selon la revendication 1, dans lequel l'autre couche est logée dans un cadre porteur et le cadre porteur est relié au support (12).
